# EUROPÄISCHE PATENTSCHRIFT

(11) **EP 0 715 302 B1**
(45) Veröffentlichungstag und Bekanntmachung des Hinweises auf die Patenterteilung: **03.05.2000**
(21) Anmeldenummer: 95118491.0
(22) Anmeldetag: 24.11.1995
(51) Int. Cl.: G11B 7/135, G11B 7/12

(54) **Vorrichtung zur berührungslosen optischen Abtastung von Informationen bei der Aufzeichnung und/oder Wiedergabe von einem Aufzeichnungsträger mit Aufzeichnungsspuren**
Device for contactless optical playback of information during recording or reproduction from a record carrier with recording tracks
Dispositif de lecture optique sans contact d'informations pendant l'enregistrement ou lecture d'un support d'enregistrement à pistes

(30) Priorität: 02.12.1994 DE 4442976
(43) Veröffentlichungstag der Anmeldung: 05.06.1996
(73) Patentinhaber: DEUTSCHE THOMSON-BRANDT GMBH, 78048 Villingen-Schwenningen (DE)
(72) Erfinder: Dang, Lieu-Kim, D-78056 Villingen-Schwenningen (DE); Uhde, Dietmar, D-78126 Königsfeld (DE)

(56) Entgegenhaltungen:
- EP-A- 0 459 025
- EP-A- 0 460 890
- EP-A- 0 555 097
- GB-A- 2 175 705
- PATENT ABSTRACTS OF JAPAN vol. 018 no. 121 (P-1700) ,25.Februar 1994 & JP-A-05 307759 (OLYMPUS OPTICAL CO LTD) 19.November 1993,

## Beschreibung

Die Erfindung betrifft eine Vorrichtung zur berührungslosen optischen Abtastung von Informationen bei der Aufzeichnung auf und/oder der Wiedergabe von einem Aufzeichnungsträger mit Aufzeichnungsspuren nach dem Oberbegriff des Anspruchs 1.

Da bei der berührungslosen optischen Abtastung keine mechanische Spurführung möglich ist, erfolgt die Nachsteuerung eines zur Aufzeichnung und/oder Wiedergabe dienenden Hauptstrahls auf die Mitte der Aufzeichnungsspur über ein Steuersignal, das aus der Detektion der Symmetrie des refelektierten Hauptstrahls und/oder der Detektion der Intensität zweier Hilfsstrahlen gewonnen wird, die jeweils zu entgegengesetzten Seiten des Zentrums des Hauptstrahls versetzt sind. Bei Verwendung von Hauptstrahl und Hilfsstrahlen erfolgt die Erzeugung der Strahlen durch einen Strahlvervielfacher, der den aus einer gemeinsamen Lichtquelle austretenden Strahl in drei diskrete Strahlen oder durch Beugung in einen Strahl nullter Ordnung und zum Strahl nullter Ordnung symmetrische Strahlenpaare erster, zweiter und n-ter Ordnung zerlegt.

Ein Strahlteiler sorgt dafür, daß die nach Totalreflexion an der Aufzeichnungsspur reflektierten Strahlen nicht nur wieder auf die Lichtquelle treffen, sondern auch auf eine örtlich von der Lichtquelle getrennte Detektoranordnung.

EP-A-0 555 097 zeigt eine solche Anordnung, nach dem Oberbegriff des Anspruchs 1.

Um durch Detektion des von Hilfsstrahlen reflektierten Lichts und des daraus gewonnenen Steuersignals das Zentrum des Hauptstrahls auf der Spurmitte und gleichzeitig die Hilfsstrahlen symmetrisch zur Spurmitte zu führen, ist es aus der DE 33 39 736 C2 bekannt, einen zwischen dem Strahlvervielfacher und der Optik angeordneten halbdurchlässigen Spiegel, der gleichzeitig als Strahlteiler dient, schwenkbar auszubilden und mit dem Steuersignal über einen Antrieb die Schwenklage des Spiegels zu steuern. Da sich der Spiegel bei dieser bekannten Vorrichtung im Strahlengang unmittelbar vor dem Objektiv befindet, also in einem Bereich, in dem der Lichtkegel der von der Lichtquelle erzeugten Strahlen bereits stark aufgeweitet ist, muß der Spiegel in seinen räumlichen Abmessungen an den aufgeweiteten Lichtkegel angepaßt sein. Anderenfalls würden Verluste der Lichtintensität der vom Objektiv auf die Aufzeichnungsspur zu fokussierenden Strahlen eintreten.

Außerdem fallen auf den Spiegel in der bekannten Anordnung drei divergierende Strahlen, nämlich der Hauptstrahl und die Hilfsstrahlen, wodurch sich im Zusammenhang mit dem aufgeweiteten Lichtkegel dieser Strahlen nochmals größere räumliche Abmessungen der Spiegelfläche ergeben.

Die erforderlichen großen Abmessungen des Spiegels ergeben eine hohe Masse und damit eine hohe mechanische Trägheit. Der Antrieb des Spiegels ist daher nicht in der Lage, schnelle Korrekturen zur Spurführung auszuführen, wie sie infolge Exzentrizität des Aufzeichnungsträgers oder bei starken Erschütterungen einer Abtastvorrichtung, z.B. beim Betrieb eines CD-Spielers mobil oder im Fahrzeug auftreten können.

Darüber hinaus können Unebenheiten der Spiegelfläche dazu führen, daß der Hauptstrahl und die Hilfsstrahlen nicht unter dem gleichen Winkel reflektiert werden und sich diese Winkel auch noch gegenseitig ändern können, wenn der Spiegel geschwenkt wird.

Weiterhin ist nicht auszuschließen, daß bei Schwenken des Spiegels auch die von der Aufzeichnungsspur reflektierten Strahlen, die den halbdurchlässigen Spiegel passieren und auf die Detektoranordnung fallen, geringfügig abgelenkt werden, so daß auch dies zu Fehlern bei der Gewinnung des Steuersignals führt.

Eine Vorrichtung, bei der ebenfalls bewegliche Spiegel im aufgeweiteten Lichtkegel unmittelbar vor einem Objektiv angeordnet sind und dabei sowohl die auf die Aufzeichnugsspur einfallenden als auch die reflektierten Strahlen umlenken, ist aus Funkschau 22/1983, Seiten 58 ff. bekannt. Zusätzlich zu einem Radialspiegel ist ein separater Tangentialspiegel vorgesehen.

Der Erfindung liegt die Aufgabe zugrunde, eine Vorrichtung der eingangs genannten Art dahingehend zu verbessern, daß mit geringem Aufwand eine schnellere und genauere Spurfindung und Spurführung ermöglicht wird.

Diese Aufgabe wird bei einer Vorrichtung nach dem Oberbegriff des Anspruchs 1 durch die im Kennzeichen angegebenen Merkmale gelöst.

Durch die Anordnung eines Mikrospiegels zwischen der Lichtquelle und dem Strahlteiler bei der erfindungsgemäßen Vorrichtung wird erreicht, daß sich dieser Mikrospiegel wegen seiner unmittelbaren Nähe zur Lichtquelle in einem nur geringfügig aufgeweiteten Bereich des Lichtkegels befindet. Die Abmessungen des Mikrospiegels können daher wesentlich geringer sein als bei den bekannten Anordnungen, ohne daß eine Schwächung der Lichtintensität eintritt. Die geringeren Abmessungen des Mikrospiegels führen zu einer im Vergleich zur bekannten Vorrichtung wesentlich geringeren Masse, wodurch sich eine sehr geringe mechanische Trägheit ergibt.

Auch ermöglichen bereits kleine Neigungswinkeländerungen des Spiegels eine große Abweichung der auf die Aufzeichnungsspur fallenden Strahlen.

Sofern zur Detektion einer Abweichung von der Aufzeichnugsspur zusätzlich Hilfsstrahlen erzeugt werden, können diese hinter dem Mikrospiegel durch einen Strahlvervielfacher gewonnen werden. Da der Mikrospiegel nur einen einzigen Strahl ablenkt, werden die anschließend erzeugten Strahlen, nämlich der Hauptstrahl und die Hilfsstrahlen, stets synchron abgelenkt.

Schließlich können auch keine Fehler dadurch auftreten, daß der von der Aufzeichnungsspur reflektierte Strahl denselben Spiegel passieren muß, wenn dieser, wie bei der bekannten Vorrichtung, als Strahlteiler ausgebildet ist. Bei der erfindungsgemäßen Vorrichtung bildet der Mikrospiegel ein vom Strahlteiler unabhängiges Bauteil.

Bei einer Weiterbildung ist der Strahlteiler in an sich bekannter Weise durch ein holographisches Element gebildet, das auf einer Seite eines Glassubstrates ein Hologramm zur Aufteilung der Richtungen der von der Lichtquelle ausgesandten Strahlen von denen der von der Aufzeichnungsspur reflektierten Strahlen trägt.

Diese Lösung ist für sich aus der Veröffentlichung "Three beam CD optical pickup using a holographic optical element", SPIE Vol. 1401, Seite 58 ff. bekannt. Die Vorrichtung ermöglicht eine sehr kompakte Realisierung des Strahlteilers.

Das Hologramm kann in einen ersten Bereich mit enger Gitterstruktur und in einen zweiten Bereich mit weiter Gitterstruktur unterteilt sein. Hierdurch wird der von der Aufzeichnungsspur refektierte Strahl in Teilstrahlen aufgespalten, die auf unterschiedliche Flächenbereiche der Detektoranordnung fallen und so für die Gewinnung von Signalen zur Spurführung und zur Fokussierung unabhängig ausgewertet werden können.

Zusätzlich kann ein Strahlvervielfacher zwischen dem Mikrospiegel und dem Strahlteiler angeordnet sein. Dieser Strahlvervielfacher ist vorzugsweise als Phasengitter ausgebildet und auf der anderen Seite des Glassubstrates angeordnet. Durch den Strahlvervielfacher können aus einem einzigen Lichtstrahl ein Hauptstrahl und zwei Hilfsstrahlen gewonnen werden, wenn zur Gewinnung von Steuersignalen Hilfsstrahlen ausgewertet werden sollen. Die gemeinsame Anordnung des Phasengitters und des Hologramms auf den beiden Seiten eines Glassubstrates bietet eine raumsparende Lösung.

Bei einer vorteilhaften Ausführungsform bilden die Lichtquelle, die Detektoranordnung, das holographische Element und der Mikrospiegel mit seinem Antrieb ein in einem gemeinsamen Gehäuse angeordnetes kompaktes Bauteil. Dadurch läßt sich der Abstand zwischen der Lichtquelle und dem sich an das holographische Element anschließenden Objektiv verringern, so daß auch das Objektiv in einem Bereich angeordnet werden kann, in welchem sich der Lichtkegel der von der Lichtquelle ausgehenden Strahlen nur geringfügig aufgeweitet hat. Die Baugröße der Optik kann dadurch im Vergleich zu bekannten Lösungen verringert werden.

Die Lichtquelle, die Detektoranordnung und das holographische Element im Gehäuse können fest zueinander justiert sein. Es entfällt dadurch eine sonst erforderliche Justierung der einzelnen Bauteile beim Aufbau und der Einstellung einer derartigen Vorrichtung in der Produktion. Ein Ausgleich eventuell noch vorhandener Fertigungstoleranzen des Bauteils aus Lichtquelle, Detektoranordnung und holographischem Element ist durch die Einstellung der Mikrospiegels möglich.

Bei einer ersten Ausführung kann der Mikrospiegel derart verformbar und/oder schwenkbar sein, daß der ausfallende Strahl in einer ersten, durch den einfallenden und den ausfallenden Strahl gebildeten Ebene in seiner Richtung veränderbar ist. Bei einer zweiten Ausführung kann der Mikrospiegel derart verformbar und/oder schwenkbar sein, daß der ausfallende Strahl in einer zweiten Ebene, die senkrecht zu einer ersten, durch den einfallenden und den ausfallenden Strahl gebildeten Ebene verläuft, in seiner Richtung veränderbar ist. Schließlich kann der Mikrospiegel auch derart verformbar und/oder schwenkbar sein, daß der ausfallende Strahl in beiden Richtungen veränderbar ist.

Die unterschiedlichen Ausführungen ermöglichen es, die Vorrichtung in unterschiedlicher Ausrichtung der Lichtquelle zum Verlauf der abzutastenden Spur einzusetzen. So kann mit der ersten Ausführung eine Spurnachführung erzielt werden, wenn die Lichtquelle quer zur Spurrichtung strahlt. Die zweite Ausführung ermöglicht eine Anordnung der Vorrichtung für den Fall, daß die Lichtquelle in Längsrichtung zur Spurführung strahlt. Bei der dritten Ausführung kann die Ausrichtung der Lichtquelle zur Spurführung jede beliebige Lage einnehmen, wenn sich die beiden Schwenk- oder Verformachsen des Mikrospiegels überlagern. Darüber hinaus ermöglicht die dritte Ausführung auch eine umfassende Korrektur von Fertigungstoleranzen des Bauteils aus Lichtquelle, Detektoranordnung und holographischem Element.

Ferner ist bei der ersten Ausgestaltung die Detektoranordnung, bezogen auf die Lage von Lichtquelle und Mikrospiegel hinter dem Mikrospiegel angeordnet, während sie bei der zweiten Ausführung bezogen auf die Lage von Lichtquelle und Mikrospiegel seitlich neben dem Mikrospiegel angeordnet ist. Bei der dritten Ausführung umfaßt die Detektoranordnung wenigstens zwei Detektoreinheiten, von denen bezogen auf die Lage von Lichtquelle und Mikrospiegel eine Detekoreinheit hinter dem Mikrospiegel und eine weitere Detektoreinheit seitlich neben dem Mikrospiegel angeordnet ist. Durch Auswahl der ersten oder zweiten Ausgestaltung ist es möglich, das Bauteil aus Lichtquelle, holographischem Element und Detektoranordnung entweder mehr in einer länglichen oder mehr in einer gedrungenen Bauform auszubilden.

Bei einer bevorzugten Ausgestaltung des Mikrospiegels ist dieser als auf diskreten Stützflächen eines Trägerchips gelagerte metallisierte Folie ausgebildet, die durch ein zwischen der metallisierten Folie und dem Trägerchip wirkendes elektrostatisches Feld verformbar ist, wobei das elektrostatische Feld kontinuierlich oder gepulst veränderbar ist.

Mikrospiegel als eine auf diskreten Stützflächen eines Trägerchips gelagerte metallisierte Folie sind an sich bekannt. Die Veröffentlichung "An Overview of the Digital Micromirror Device (DMD) and Its Application to Projection Displays", SID 93 DIGEST, Seite 1012 ff. beschreibt eine Spiegelanordnung aus mehreren, in einer Matrix angeordneten, getrennt verformbaren Spiegeln, mit denen ein Bild pixelweise durch einen Lichtstrahl projiziert werden kann. Die einzelnen Spiegelelemente sind dabei zwischen einer ersten und einer zweiten Schwenkstellung veränderbar, so daß in der einen Schwenkstellung der einfallende Strahl außerhalb des Betrachtungsfeldes geschwenkt wird und in der anderen Schwenkstellung auf eine innerhalb des Betrachtungsfeldes liegende Position.

Die bekannte Anordnung aus einer Vielzahl von Mikrospiegeln ist allerdings für den vorliegenden Fall nicht geeignet, da einerseits keine Matrix benötigt wird und andererseits die Einzelspiegel nicht kontinuierlich veränderbar, sondern nur zwischen zwei Endstellungen schwenkbar oder verformbar sind. Für den vorliegenden Anwendungsfall wird eine Ausgestaltung vorgeschlagen, bei der ein einziger Spiegel vorhanden ist, und dieser kontinuierlich geschwenkt werden kann. Dies ist entweder durch eine kontinuierliche Änderung des elektrostatischen Feldes möglich oder durch eine gepulste Veränderung. Wenn bei der gepulsten Veränderung die Pulsfrequenz oberhalb der mechanischen Grenzfrequenz liegt, kann so durch geeignete Pulsmodulation auch jede Zwischenstellung zwischen zwei möglichen Endstellungen gezielt angesteuert werden.

Ein weiterer Grund, weshalb Mikrospiegel der bekannten Art für die Anwendung in einem Pickup zur Spurführung optischer Aufzeichnungsträger zunächst nicht geeignet erscheinen, besteht im Auslenkungswinkel und der Größe der Spiegel. Der Auslenkungswinkel beträgt etwa ± 10° und die größte Ausdehnung etwa 17µm. Zum Ausgleich der Exzentrizität des Aufzeichnungsträgers von etwa 100 µm sind jedoch ein Auslenkungswinkel von 40° und eine Mindestgröße von 250 µm erforderlich. Aus diesem Grund wird in bekannten CD-Abspielgeräten mit hohem mechanischem Aufwand die Objektivlinse zur Spurführung ausgelenkt. Auch kann der Abstand zwischen dem Mikrospiegel und der Objektivlinse aufgrund ihres Durchmessers nicht beliebig erhöht werden. Der Strahlversatz als Abstand zwischen den optischen Achsen der Objektivlinse und des Laserstrahls darf den Linsendurchmesser nicht überschreiten.

Das Verwenden eines Mikrospiegels in der oben angegebenen Art wird jedoch dennoch durch Verkürzen des objektseitigen Abstandes, d.h. des Abstandes zwischen Objektivlinse und Lichtquelle ermöglicht, so daß eine zusätzliche Auslenkung der Objektivlinse nicht erforderlich ist. Sollten künftig jedoch ähnliche Spiegel mit größerer Fläche und größerem Auslenkungswinkel zur Verfügung stehen, so können auch diese verwendet werden.

Nachfolgend wird die Erfindung anhand der Zeichnung erläutert.

In der Zeichnung zeigen:
- Fig. 1: eine Prinzipskizze der erfindungsgemäßen Vorrichtung im Längsschnitt,
- Fig. 2: eine perspektivische Ansicht einer Einheit aus Lichtquelle, holographischem Element, Mikrospiegel und Detektoranordnung,
- Fig. 3: eine Abtastervorrichtung zum Abtasten einer CD in ersten Ausgestaltung in perspektivischer Ansicht und
- Fig. 4: eine Abtastervorrichtung in einer zweiten Ausgestaltung.

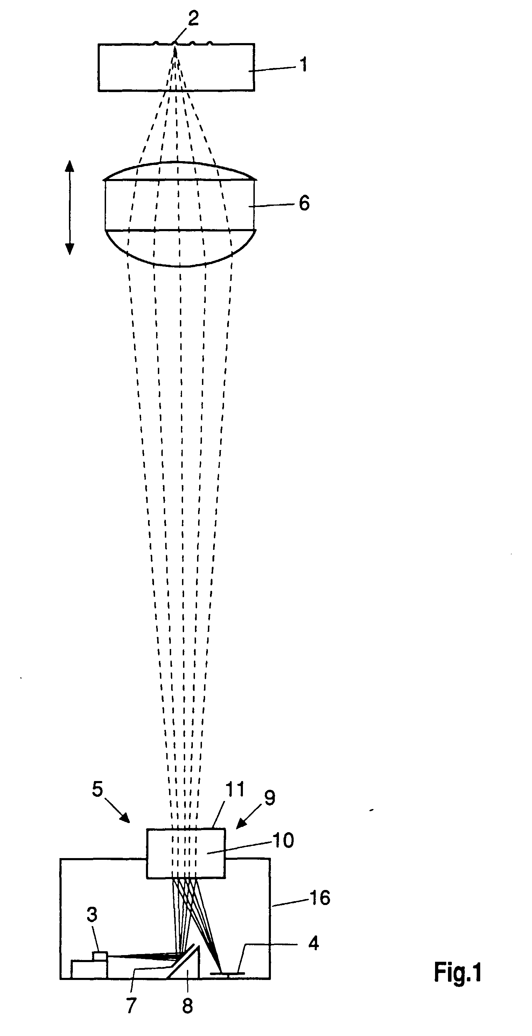

Fig. 1 zeigt im Längsschnitt eine Vorrichtung nach der Erfindung. Die Vorrichtung umfaßt eine als Laserdiode ausgebildete Lichtquelle 3, einen Mikrospiegel 7, mit einem Antrieb 8, ein holographisches Element 9, eine Detektoranordnung 4 und eine Objektivlinse 6. Die Lichtquelle 3, der Mikrospiegel 7 mit seinem Antrieb 8, das holographische Element 9 und die Detektoranordnung 4 bilden eine Einheit in einem gemeinsamen Gehäuse 16.

Von der Lichtquelle 3 emittiertes Licht fällt auf den Mikrospiegel 7 und wird in eine durch die Neigung des Mikrospiegels 7 zur Lichtquelle 3 vorgegebene Richtung umgelenkt. Von dort aus fällt der Lichtstrahl auf das holographische Element 9, das ein Glassubstrat 10 umfaßt und auf einer Seite des Glassubstrats 10 ein Hologramm 11 als Strahlteiler 5 zur Aufteilung der Richtungen der von der Lichtquelle 3 ausgesandten Strahlen von denen der von der Aufzeichnungsspur 2 eines Aufzeichnungsträgers 1 reflektierten Strahlen trägt. Das holographische Element 9 kann zusätzlich auf der anderen Seite des Glassubstrats 10 ein Phasengitter 15 als Strahlvervielfacher 14 zur Bildung eines Hauptstrahls und zweier Hilfsstrahlen tragen.

Der Strahl oder die Strahlen gelangen zu einer Objektivlinse 6 und werden dort auf die Aufzeichnungsspur 2 einer optischen CD als Aufzeichnungsträger 1 fokussiert. Bei Abtastung von auf der Aufzeichnungsspur 2 aufgezeichneten Informationen wird das einfallende Licht total reflektiert und in der Intensität moduliert und gelangt zurück durch die Objektivlinse 6 zum holographischen Element 9. Dort werden die reflektierten Lichtstrahlen in Richtung auf die Detektoranordnung 4 abgelenkt.

Die Detektoranordnung 4 empfängt den Hauptstrahl und gegebenenfalls die Hilfsstrahlen und erzeugt Signale, die einerseits die aufgezeichneten Informationen und andererseits Steuersignale für eine Nachführung des Mikrospiegels 7 und der Objektivlinse 6 darstellen. Durch die Steuersignale wird der Mikrospiegel 7 über seinen Antrieb 8 so eingestellt, daß das Zentrum des Hauptstrahls in der Mitte der jeweiligen Aufzeichnungsspur 2 gehalten wird. Die Objektivlinse 6 wird über einen eigenen Antrieb so gesteuert, daß die Strahlen auf der Aufzeichnungsspur 2 der optischen Disk fokussiert sind.

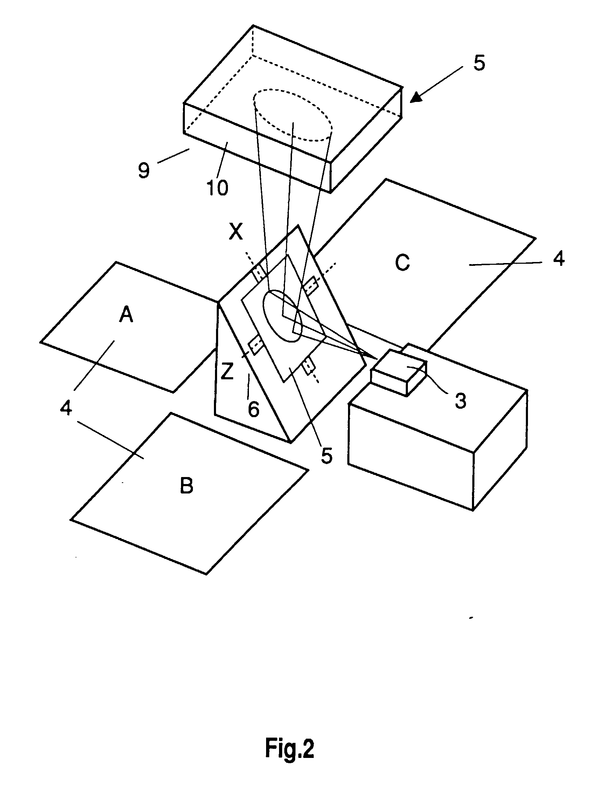

In Fig. 2 sind die Anordnungen von Lichtquelle 3, holographischem Element 9, Mikrospiegel 7 und Detektoranordnungen 4 dargestellt. Der Mikrospiegel 7 kann dabei einmal um eine schematisch dargestellte Achse Z verformt oder verschwenkt werden, so daß der ausfallende Strahl in einer ersten, durch den einfallenden und ausfallenden Strahl gebildeten Ebene in seiner Richtung verändert wird. Die zugehörige Detektoranordnung 4 ist in diesem Fall hinter dem Mikrospiegel 7, bezogen auf die Anordnung von Lichtquelle 3 und Mikrospiegel 7 als A angeordnet.

Weiterhin ist durch eine X-Achse eine Schwenkbeweglichkeit oder Verformbarkeit des Mikrospiegels 7 angedeutet, wodurch der ausfallende Strahl in einer zweiten Ebene, die senkrecht zu einer ersten, durch den einfallenden und den ausfallenden Strahl gebildeten Ebene verläuft, in seiner Richtung veränderbar ist. Die zu dieser Variante gehörenden Detektoranordnungen 4 sind seitlich neben dem Mikrospiegel 7, bezogen auf die Anordnung aus Mikrospiegel 7 und Lichtquelle 3 als B und C angeordnet. Dabei können die Detektoranordnungen 4 wahlweise auf der linken oder der rechten Seite des Mikrospiegels 7 angeordnet sein.

Im Falle, daß der Mikrospiegel 7 sowohl um die X-Achse als auch um die Z-Achse schwenkbar oder verformbar ist, sind Detektoranordnungen 4 als Detektoreinheiten A, B, C sowohl hinter dem Mikrospiegel 7 als auch seitlich neben dem Mikrospiegel 7 vorhanden.

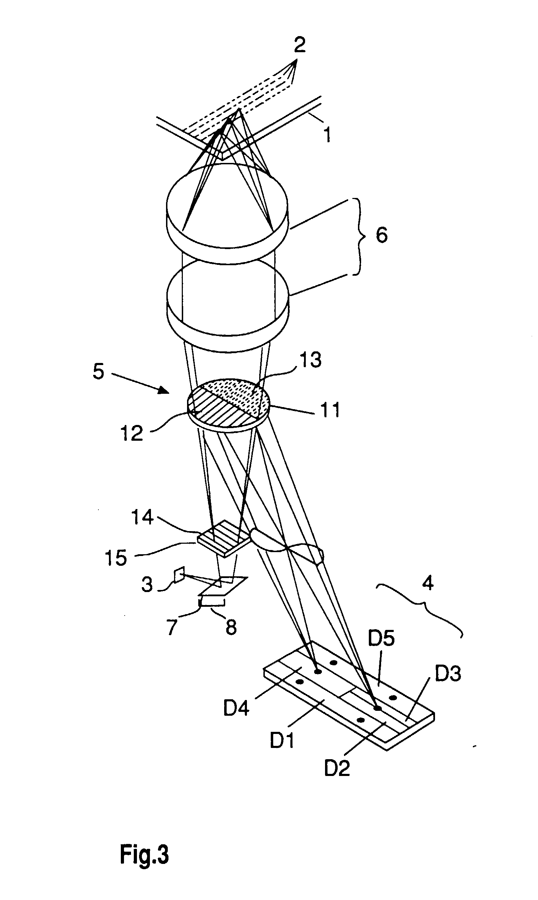

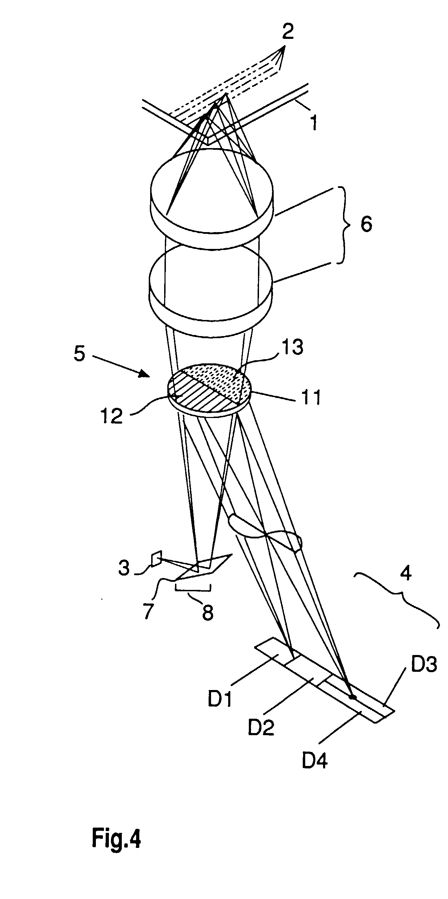

Die Fig. 3 und 4 zeigen eine Abtastervorrichtung für eine CD, bestehend aus einer Lichtquelle 3, einem Mikrospiegel 7, einem Hologramm 11, einer Optik 6 aus einer Kollimatorlinse und einer Objektivlinse sowie einer Detektoranordnung 4. Die Abtastervorrichtung in Fig. 3 enthält zusätzlich ein Phasengitter 15, mit dem aus einem einzigen Strahl durch Beugung ein Hauptstrahl nullter Ordnung und zum Strahl nullter Ordnung symmetrische Strahlenpaare erster, zweiter und n-ter Ordnung erzeugt werden. Die Strahlenpaare zweiter und n-ter Ordnung liegen jedoch soweit außermittig, daß sie durch die Optik 6 nicht abgebildet werden.

Die Abtastervorrichtung in Fig. 4 kommt ohne zusätzliche Phasengitter aus. Hier wird der Effekt ausgenutzt, daß die Aufzeichnungsspur 2 die Funktion eines Phasengitters übernimmt und durch Beugung einen reflektierten Strahl nullter Ordnung und Strahlenpaare erster, zweiter und n-ter Ordnung erzeugt. Auch hier liegen die Strahlenpaare zweiter und n-ter Ordnung soweit außermittig, daß sie durch die Optik 6 nicht abgebildet werden. In Abhängigkeit des Auftreffpunktes des auftreffenden Strahls auf der Auzeichnungsspur 2 ergeben die reflektierten Strahlenpaare erster Ordnung durch Interferenz Lichtflecken unterschiedlicher Intensität auf der Detektoranordnung zu beiden Seiten des durch den reflektierten Hauptstrahl erzeugten Lichtflecks.

Die Detektoranordnungen 4 der Abtastervorrichtungen von Fig. 3 und 4 unterscheiden sich in der Aufteilung der Detektionsfelder und der Gewinnung der Nutz- und Steuersignale.

In Fig. 3 umfaßt die Detektoranordnung 4 fünf Detektionsflächen D1 bis D5. Durch Unterteilung des Hologrammusters in zwei Bereiche 12, 13, in denen die Gitterabstände unterschiedlich sind, wird der einfallende Strahl in zwei Unterstrahlen gespalten. Der durch kleine Gitterabstände des Hologramms erzeugte Unterstrahl des Hauptstrahls wird auf eine Teilungslinie zwischen die Detektionsflächen D2 und D3 geworfen. Der durch große Gitterabstände des Hologramms erzeugte Unterstrahl des Hauptstrahls wird auf die Detektionsfläche D4 geworfen. Die zwei reflektierten Hilfsstrahlen werden auf die Detektionsflächen D1 und D5 geworfen.

Aus der Lichtintensität der auf die Flächen D1 bis D5 einfallenden Strahlen werden Signale gewonnen, aus denen Steuer- und Nutzsignale in folgender Weise erzeugt werden:
Ein Fokusfehlersignal zur Steuerung des Antriebs der Optik 6 aus den Lichtintensitäten auf die Flächen D2 und D3 als
Fokusfehler = D2 - D3.

Ein Spurfehlersignal zur Steuerung des Antriebs 8 des Mikrospiegels 7 aus den Lichtintensitäten auf die Flächen D1 und D5 als
Spurfehler = D1 - D5.

Ein Nutzsignal aus der Lichtintensität auf die Fläche D4 oder die Flächen D2 und D3 als
Nutzsignal = D4 oder D2 + D3 oder D2 + D3 + D4

In Fig. 4 umfaßt die Detektoranordnung 4 vier Detektionsflächen D1 bis D4. Durch das Hologramm 11 wird der Hauptstrahl in zwei Unterstrahlen unterteilt, von denen der eine Unterstrahl auf die Teilungslinie zwischen den Detektionsflächen D1 und D2 und der andere Unterstrahl auf die Teilungslinie zwischen den Detektionsflächen D3 und D4 geworfen wird.

Aus der Lichtintensität der auf die Flächen D1 bis D4 einfallenden Strahlen werden Signale gewonnen, aus denen Steuer- und Nutzsignale in folgender Weise erzeugt werden:
Ein Fokusfehlersignal zur Steuerung des Antriebs der Optik 6 aus den Lichtintensitäten auf die Flächen D3 und D4 als
Fokusfehler = D3 - D4.

Ein Spurfehlersignal zur Steuerung des Antriebs 8 des Mikrospie7 aus den Lichtintensitäten auf die Flächen D1 und D2 als
Spurfehler = D1 - D2.

Ein Nutzsignal aus der Lichtintensität auf die Flächen D1 bis D4 als
Nutzsignal = D1 + D2 + D3 + D4 oder D1 + D2

## Patentansprüche

1. Vorrichtung zur berührungslosen optischen Abtastung von Informationen bei der Aufzeichnung auf und/oder bei der Wiedergabe von einem Aufzeichnungsträger (1) mit Aufzeichnungsspuren (2), bestehend aus einer Lichtquelle (3), die auf Aufzeichnungsspuren (2) Licht aussendet und einer Detektoranordnung (4), die von der Aufzeichnungsspur (2) reflektiertes Licht empfängt, wobei im Strahlengang zwischen der Lichtquelle (3) und der Detektoranordnung (4) ein Mikrospiegel (7), ein Strahlteiler (5) sowie eine Optik (6) angeordnet sind, dadurch gekennzeichnet, daß der zwischen der Lichtquelle (3) und dem Strahlteiler (5) befindliche Mikrospiegel (7) derart angeordnet ist, daß dessen Spiegelfläche mittels eines Antriebs (8) verformbar und/oder schwenkbar ist, wodurch der Einfallswinkel und/oder der Einfallsort des von der Lichtquelle (3) über den Mikrospiegel (7) auf den Strahlteiler (5), die Optik (6) und die Aufzeichnungsspur (2) treffenden Lichtstrahls in Abhängigkeit der Schwenklage und/oder Verformung des Mikrospiegels (7) veränderbar ist.

2. Vorrichtung nach Anspruch 1, dadurch gekennzeichnet, daß der Strahlteiler (5) durch ein holografisches Element (9) gebildet ist, das auf einer Seite eines Glassubstrates (10) ein Hologramm (11) zur Aufteilung der Richtungen der von der Lichtquelle (3) ausgesandten Strahlen von denen der von der Aufzeichnungsspur (2) reflektierten Strahlen trägt.

3. Vorrichtung nach Anspruch 2, dadurch gekennzeichnet, daß das Hologramm (11) in einen ersten Bereich (13) mit enger Gitterstruktur und in einen zweiten Bereich (12) mit weiter Gitterstruktur unterteilt ist.

4. Vorrichtung nach einem der Ansprüche 1 bis 3, dadurch gekennzeichnet, daß zusätzlich ein Strahlvervielfacher (14) zwischen dem Mikrospiegel (7) und dem Strahlteiler (5) angeordnet ist.

5. Vorrichtung nach Anspruch 4, dadurch gekennzeichnet, daß der Strahlvervielfacher (14) als Phasengitter (15) ausgebildet und auf der anderen Seite des Glassubstrates (10) angeordnet ist.

6. Vorrichtung nach einem der Ansprüche 2 bis 5, dadurch gekennzeichnet, daß die Lichtquelle (3), die Detektoranordnung (4), das holografische Element (9) und der Mikrospiegel (7) mit seinem Antrieb (8) ein in einem gemeinsamen Gehäuse (16) angeordnetes kompaktes Bauteil bilden.

7. Vorrichtung nach Anspruch 6, dadurch gekennzeichnet, daß die Lichtquelle (3), die Detektoranordnung (4) und das holografische Element (9) im Gehäuse fest zueinander justiert sind.

8. Vorrichtung nach einem der Ansprüche 1 bis 7, dadurch gekennzeichnet, daß der Mikrospiegel (7) derart verformbar und/oder schwenkbar ist, daß der ausfallende Strahl in einer ersten, durch den einfallenden und den ausfallenden Strahl gebildeten Ebene in seiner Richtung veränderbar ist.

9. Vorrichtung nach einem der Ansprüche 1 bis 7, dadurch gekennzeichnet, daß der Mikrospiegel (7) derart verformbar und/oder schwenkbar ist, daß der ausfallende Strahl in einer zweiten Ebene, die senkrecht zu einer ersten, durch den einfallenden und den ausfallenden Strahl gebildeten Ebene verläuft, in seiner Richtung veränderbar ist.

10. Vorrichtung nach Ansprüche 8 und 9, dadurch gekennzeichnet, daß der Mikrospiegel (7) derart verformbar und/oder schwenkbar ist, daß der ausfallende Strahl sowohl in einer ersten, durch den einfallenden und den ausfallenden Strahl gebildeten Ebene als auch in einer zweiten, senkrecht zu einer ersten Ebene verlaufenden Ebene in seiner Richtung veränderbar ist.

11. Vorrichtung nach Anspruch 8, dadurch gekennzeichnet, daß die Detektoranordnung (4), bezogen auf die Lage von Lichtquelle (3) und Mikrospiegel (7), hinter dem Mikrospiegel (7) angeordnet ist.

12. Vorrichtung nach Anspruch 9, dadurch gekennzeichnet, daß die Detektoranordnung (4), bezogen auf die Lage von Lichtquelle (3) und Mikrospiegel (7), seitlich neben dem Mikrospiegel (7) angeordnet ist.

13. Vorrichtung nach Anspruch 10, dadurch gekennzeichnet, daß die Detektoranordnung (4) wenigstens zwei Detektoreinheiten (A, B, C) umfaßt, von denen, bezogen auf die Lage von Lichtquelle (3) und Mikrospiegel (7), eine Detektoreinheit (A) hinter dem Mikrospiegel (7) und eine weitere Detektoreinheit (B, C) seitlich neben dem Mikrospiegel (7) angeordnet ist.

14. Vorrichtung nach einem der Ansprüche 1 bis 13, dadurch gekennzeichnet, daß der Mikrospiegel (7) als auf diskreten Stützflächen eines Trägerchips gelagerte metallisierte Folie ausgebildet ist, die durch ein zwischen der metallisierten Folie und dem Trägerchip wirkendes elektrostatisches Feld verformbar ist, wobei das elektrostatische Feld kontinuierlich oder gepulst veränderbar ist.

## Claims

1. A device for contactless optical scanning of information during recording on and/or reproduction from a record carrier (1) with recording tracks (2), comprising a light source (3), which transmits light to recording tracks (2), and a detector arrangement (4), which receives light reflected by the recording track (2), a micro mirror (7), a beam divider (5) and an optical system (6) being arranged in the beam path between the light source (3) and the detector arrangement (4), characterised in that the micro mirror (7) disposed between the light source (3) and the beam divider (5) is arranged in such a manner that its mirror surface is deformable and/or pivotable by means of a drive (8), so that the angle of incidence or the point of incidence of the light beam transmitted by the light source (3) via the micro mirror (7) onto the beam divider (5), the optical system (6) and the recording track (2) is variable as a function of the pivoting position and/or deformation of the micro mirror (7).

2. A device according to claim 1, characterised in that the beam divider (5) is formed by a holographic element (9), which on one side of a glass substrate (10) supports a hologram (11) for separating the directions of the beams transmitted by the light source (3) from those of the beams reflected by the recording track (2).

3. A device according to claim 2, characterised in that the hologram (11) is divided into a first region (13) with a narrow grating structure and a second region (12) with a wide grating structure.

4. A device according to one of claims 1 to 3,
characterised in that a beam multiplier (14) is additionally arranged between the micro mirror (7) and the beam divider (5).

5. A device according to claim 4, characterised in that the beam multiplier (14) is constructed as a phase grating (15) and is arranged on the other side of the glass substrate (10).

6. A device according to one of claims 2 to 5,
characterised in that the light source (3), the detector arrangement (4), the holographic element (9) and the micro mirror (7) with its drive (8) form a compact unit arranged in a common housing (16).

7. A device according to claim 6, characterised in that the light source (3), the detector arrangement (4) and the holographic element (9) are fixedly adjusted relative to one another in the housing.

8. A device according to one of claims 1 to 7,
characterised in that the micro mirror (7) is deformable and/or pivotable in such a manner that the outgoing beam is variable in its direction in a first plane formed by the incoming and outgoing beams.

9. A device according to one of claims 1 to 7,
characterised in that the micro mirror (7) is deformable and/or pivotable in such a manner that the outgoing beam is variable in its direction in a second plane, which extends perpendicular to the first plane formed by the incoming and outgoing beams.

10. A device according to claims 8 or 9, characterised in that the micro mirror (7) is deformable and/or pivotable in such a manner that the outgoing beam is variable in its direction both in a first plane formed by the incoming and outgoing beams and in a second plane extending perpendicular to a first plane.

11. A device according to claim 8, characterised in that the detector arrangement (4) is arranged behind the micro mirror (7) in relation to the position of the light source (3) and micro mirror (7).

12. A device according to claim 9, characterised in that the detector arrangement (4) is arranged laterally adjacent the micro mirror (7) in relation to the position of the light source (3) and micro mirror (7).

13. A device according to claim 10, characterised in that the detector arrangement (4) comprises at least two detector units (A, B, C), of which, in relation to the position of the light source (3) and micro mirror (7), one detector unit (A) is arranged behind the micro mirror (7) and a further detector unit (B, C) is arranged laterally adjacent the micro mirror (7).

14. A device according to one of claims 1 to 13,
characterised in that the micro mirror (7) is constructed as a metallised film, which is mounted on separate support surfaces of a carrier chip and is deformable by an electrostatic field acting between the metallised film and the carrier chip, the electrostatic field being continuously variable or variable in pulsed fashion.

## Revendications

1. Dispositif de lecture optique sans contact d'informations pendant l'enregistrement ou lecture d'un support d'enregistrement (1) à pistes (2) composé d'une source de lumière (3) qui émet de la lumière sur des pistes d'enregistrement (2) et d'un détecteur (4) qui capte la lumière réfléchie par la piste d'enregistrement (2), dans lequel un micromiroir (7), un séparateur de faisceau (5) et une optique (6) sont placés sur la trajectoire des rayons entre la source de lumière (3) et le détecteur (4), **caractérisé en ce que** le micromiroir (7) qui se trouve entre la source de lumière (3) et le séparateur de faisceau (5) est placé de telle sorte que sa surface de réflexion soit déformable et/ou orientable à l'aide d'un moteur (8), ce qui permet de modifier l'angle et/ou le lieu d'incidence du rayon lumineux qui se déplace de la source de lumière (3) au micromiroir (7) en passant par le séparateur de faisceau (5), l'optique (6) et la piste d'enregistrement (2) en fonction de la position d'orientation et/ou de la déformation du micromiroir (7).

2. Dispositif conforme à la revendication 1, **caractérisé en ce que** le séparateur de faisceau (5) se présente sous la forme d'un élément holographique (9) dont un côté du substrat de verre (10) présente un hologramme (11) permettant d'orienter différemment les rayons émis par la source de lumière (3) et les rayons réfléchis par la piste d'enregistrement (2).

3. Dispositif conforme à la revendication 2, **caractérisé en ce que** l'hologramme (11) est divisé selon une structure en grille étroite dans une première zone (13) et selon une structure en grille large dans une deuxième zone (12).

4. Dispositif conforme à l'une des revendications 1 à 3, **caractérisé en ce que** un multiplicateur de rayons (14) est placé en supplément entre le micromiroir (7) et le séparateur de faisceau (5).

5. Dispositif conforme à la revendication 4, **caractérisé en ce que** le multiplicateur de rayons (14) est constitué en réseau de phase (15) et placé de l'autre côté du substrat de verre (10).

6. Dispositif conforme à l'une des revendications 2 à 5, **caractérisé en ce que** la source de lumière (3), le détecteur (4), l'élément holographique (9) et le micromiroir (7) muni d'un moteur (8) forment une unité compacte dans un même boîtier.

7. Dispositif conforme à la revendication 6, **caractérisé en ce que** la source de lumière (3), le détecteur (4) et l'élément holographique (9) sont réglés ensemble dans le boîtier.

8. Dispositif conforme à l'une des revendications 1 à 7, **caractérisé en ce que** le micromiroir (7) est déformable et/ou orientable de telle sorte que l'orientation du rayon sortant puisse être modifiée dans un premier plan constitué par les rayons entrant et sortant.

9. Dispositif conforme à l'une des revendications 1 à 7, **caractérisé en ce que** le micromiroir (7) est déformable et/ou orientable de telle sorte que l'orientation du rayon sortant puisse être modifiée dans un second plan perpendiculaire au premier plan constitué par les rayons entrant et sortant.

10. Dispositif conforme aux revendications 8 et 9, **caractérisé en ce que** le micromiroir (7) est déformable et/ou orientable de telle sorte que l'orientation du rayon sortant puisse être modifiée dans un premier plan constitué par les rayons entrant et sortant, mais également dans un second plan perpendiculaire au premier.

11. Dispositif conforme à la revendication 8, **caractérisé en ce que** le détecteur (4) est placé derrière le micromiroir (7), en fonction de la position de la source de lumière (3) et du micromiroir (7).

12. Dispositif conforme à la revendication 9, **caractérisé en ce que** le détecteur (4) est placé de façon latérale à côté du micromiroir (7), en fonction de la position de la source de lumière (3) et du micromiroir (7).

13. Dispositif conforme à la revendication 10, **caractérisé en ce que** le détecteur (4) présente au moins deux unités détectrices (A, B, C), dont l'une (A) est placée derrière le micromiroir (7) en fonction de la position de la source de lumière (3) et du micromiroir (7) et une autre (B, C) est placée de façon latérale à côté du micromiroir (7).

14. Dispositif conforme à l'une des revendications 1 à 13, **caractérisé en ce que** le micromiroir (7) se présente sous la forme d'une feuille métallisée placée sur les surfaces d'appui discrètes d'une puce de support, où il est possible de déformer cette feuille en appliquant un champ électrostatique actif modifiable en continu ou pulsé entre la feuille métallisée et la puce de support.
